(19) Europäisches Patentamt
European Patent Office
Office européen des brevets

(11) EP 0 553 756 B1

(12) EUROPÄISCHE PATENTSCHRIFT

(45) Veröffentlichungstag und Bekanntmachung des Hinweises auf die Patenterteilung:
**26.08.1998 Patentblatt 1998/35**

(51) Int Cl.[6]: **C08G 69/32**

(21) Anmeldenummer: **93101115.9**

(22) Anmeldetag: **26.01.1993**

(54) **Aromatische Copolyamide, Verfahren zu ihrer Herstellung und daraus geformte Gebilde**

Aromatic copolyamides, process for their preparation and molded articles therefrom

Copolyamides aromatiques, procédé pour leur préparation et articles moulés à partir de ceux-ci

(84) Benannte Vertragsstaaten:
**CH DE FR GB IT LI NL**

(30) Priorität: **27.01.1992 DE 4202164**

(43) Veröffentlichungstag der Anmeldung:
**04.08.1993 Patentblatt 1993/31**

(73) Patentinhaber: **HOECHST AKTIENGESELLSCHAFT**
**65926 Frankfurt am Main (DE)**

(72) Erfinder:
- **Jung, Holger, Dr.**
  **W-6272 Niedernhausen (DE)**
- **Klein, Peter, Dr.**
  **W-6200 Wiesbaden (DE)**
- **Heinrich, Karl**
  **W-8934 Grossaitingen (DE)**

(74) Vertreter: **Plate, Jürgen et al**
**Patentanwaltskanzlei Zounek,**
**Industriepark Kalle-Albert,**
**Rheingaustrasse 190**
**65203 Wiesbaden (DE)**

(56) Entgegenhaltungen:
**EP-A- 0 322 837**
**EP-A- 0 445 673**
**DE-A- 3 007 063**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft neue, aromatische Copolyamide des Dicarbonsäure-Diamin-Typs, die aus ihren Lösungen in organischen Lösemitteln versponnen werden können sowie daraus hergestellte geformte Gebilde, wie Fäden, Fasern, Faserpulp, Filme, Folien und Membranen mit sehr hohem Anfangsmodul (Elastizitätsmodul), sowie Verfahren zu ihrer Herstellung.

Aromatische Polyamide (Polyaramide) sind bekanntlich Rohstoffe von hoher thermischer und chemischer Stabilität sowie geringer Brennbarkeit. So zeigen beispielsweise Fasern und Folien aus solchen Rohstoffen sehr gute mechanische Eigenschaften, wie hohe Festigkeit und hohen Anfangsmodul (Elastizitätsmodul) und sind für technische Einsatzgebiete gut geeignet - beispielsweise zur Verstärkung von Kunststoffen oder als Filtermaterialien.

Es ist bekannt, daß Fäden oder Fasern aus Polyaramiden mit hoher Festigkeit und hohem Anfangsmodul hergestellt werden können, wenn die Amidbindungen an den aromatischen Kernen koaxial oder nahezu parallel zueinander orientiert sind, wodurch starre, stäbchenförmige Polymermoleküle entstehen.

Ein typisches Polyamid dieser Art ist beispielsweise Poly-(p-phenylenterephthalamid). Fäden aus diesem Material sind beispielsweise in der Deutschen Patentschrift 22 19 703 beschrieben.

Dieses Polyamid weist eine Reihe von Vorzügen auf, seine Herstellung und seine Verarbeitung sind jedoch sehr schwierig. Wegen der Unlöslichkeit in polaren organischen Lösungsmitteln - und zwar auch in Gegenwart von anorganischen Salzen, wie Calciumchlorid oder Lithiumchlorid, als Lösungsvermittler - fällt dieses Polymer kurz nach seiner Bildung bereits aus dem Reaktionsmedium aus. Es muß isoliert, gewaschen, getrocknet und dann erneut in einem Spinnlösungsmittel gelöst werden. Bevorzugtes Lösungsmittel zur Herstellung der Spinnlösungen ist konzentrierte Schwefelsäure, was besondere Probleme bei der Handhabung (Arbeitssicherheit, Korrosion) und Abfallbeseitigung verursacht.

Es wurde daher versucht, diese Schwierigkeiten dadurch zu umgehen, daß Copolyamide entwickelt wurden, welche eine gute Löslichkeit in den bekannten Amid-Lösungsmitteln haben, die sich auch gut verspinnen lassen und deren Filamente sich nach Verstreckung durch hohe Festigkeitswerte und Anfangsmoduli auszeichnen.

So wurden beispielsweise in der Deutschen Patentschrift 25 56 883 und in der Deutschen Offenlegungsschrift 30 07 063 Copolyamide aus Terephthalsäure, p-Phenylendiamin und 3,4'-Diaminodiphenylether beschrieben, die in Amid-Lösungsmitteln isotrope Lösungen liefern, die sich gut verspinnen lassen. Die Filamente erlangen durch eine sehr hohe Verstreckung hohe Festigkeiten und Moduli. Die erhöhte Löslichkeit wird hier durch die meta-Orientierung und das Sauerstoffatom verursacht. Es besteht allerdings immer noch ein Bedarf an Aramiden, die sich aus bekannten Amid-Lösungsmitteln zu Fasern mit hohen Festigkeiten und Moduli verarbeiten lassen und die auf möglichst wirtschaftliche Weise zu geformten Gebilden verarbeitet werden können. Bei der Herstellung von Multifilamentgarnen mit vorgegebener Feinheit wird der Durchsatz durch die Anlage und somit die Wirtschaftlichkeit des Spinnverfahrens hauptsächlich durch die Spinngeschwindigkeit und das maximal erzielbare Verstreckverhältnis bestimmt. Die Spinngeschwindigkeit ist im Gegensatz zum erzielbaren Verstreckverhältnis im allgemeinen von der Zusammensetzung der Polymeren unabhängig. Um einen hohen Durchsatz durch die Anlage zu erzielen sind also Polymere zu entwickeln, die sich zu Fasern verarbeiten lassen, die sich durch ein möglichst hohes erzielbares Verstreckverhältnis auszeichnen.

Aus EP-A-0,322,837 sind aromatische ter- bzw. tetra Polyamide bekannt, die zweiwertige aromatische Reste enthalten, bei denen die Bindungen in meta-Stellung zueinander stehen. Die aus diesem Material hergestellten Fasern haben jedoch für bestimmte Anwendungen unzureichende Festigkeiten.

Aus EP-A-0,445,673 sind aromatische tetra-Polyamide bekannt, die maximal 5 Mol% zweiwertige aromatische Reste enthalten, bei denen die Bindungen in meta-Stellung zueinander stehen.

Der vorliegenden Erfindung liegt daher die Aufgabe zugrunde, weitere aromatische Copolyamide zu finden, die sich durch eine gute Löslichkeit in Polyamidlösungsmitteln und durch eine gute Verspinnbarkeit auszeichnen, die zu hoch verstreckbaren Gebilden verformt werden können und aus denen geformte Gebilde mit hoher Festigkeit und hoher Dehnung hergestellt werden können.

Die erfindungsgemäßen Copolyamide sind gekennzeichnet durch die Anwesenheit ausgewählter aromatischer Diaminkomponenten in ausgewählten Mengenanteilen.

Die vorliegende Erfindung betrifft in organischen Polyamid-Lösungsmitteln lösliche aromatische Copolyamide enthaltend die wiederkehrenden Struktureinheiten der Formeln Ia, Ib, Ic und Id

$$[\text{-OC-R}^1\text{-CO-NH-R}^2\text{-NH-}] \qquad \text{(Ia),}$$

$$[\text{-OC-R}^1\text{-CO-NH-R}^3\text{-NH-}] \qquad \text{(Ib),}$$

$$[-OC-R^1-CO-NH-R^4-NH-] \quad (Ic),$$

$$[-OC-R^1-CO-NH-R^5-NH-] \quad (Id),$$

worin mindestens 90 Mol% aller Reste $R^1$, bezogen auf die Menge dieser Reste im Copolymer, einen zweiwertigen aromatischen Rest bedeuten, dessen Valenzbindungen sich in para- oder in vergleichbarer koaxialer oder paralleler Stellung zueinander befinden, der gegebenenfalls mit ein oder zwei inerten Resten substituiert ist, und bis zu 10 Mol% aller Reste $R^1$, bezogen auf die Menge dieser Reste im Copolymer, einen zweiwertigen aromatischen Rest bedeuten, dessen Valenzbindungen sich in meta- oder in vergleichbarer gewinkelter Stellung ( zueinander befinden, der gegebenenfalls mit ein oder zwei inerten Resten substituiert ist,

$R^2$ ein zweiwertiger aromatischer Rest ist, dessen Valenzbindungen sich in para- oder in vergleichbarer koaxialer oder paralleler Stellung zueinander befinden, der gegebenenfalls mit ein oder zwei inerten Resten substituiert ist,
$R^3$ einen Rest der Formel II bedeutet,

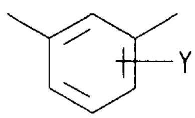

( I I ),

$R^4$ einen Rest der Formel III bedeutet,

$$-Ar^1-O-Ar^1-O-Ar^1- \quad (III),$$

und
$R^5$ einen Rest der Formel IV und/oder V bedeutet,

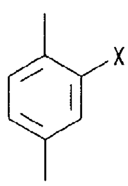

( I V ),

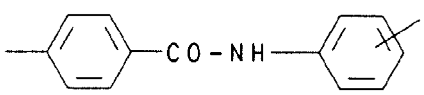

( V ),

worin $Ar^1$ eine der für $R^2$ definierten Bedeutungen aufweist, Y Wasserstoff, ein Halogenatom, insbesondere Chlor oder Brom, Methyl oder Methoxy ist, X ein Halogenatom, insbesondere Chlor oder Brom, Methyl oder Methoxy bedeutet, und wobei der Anteil der wiederkehrenden Struktureinheiten Ia, Ib, Ic und Id, bezogen auf die Summe dieser Struktureinheiten im Copolymer, innerhalb folgender Grenzen liegt:

wiederkehrende Struktureinheit der Formel Ia: 30 bis 70 Mol%, vorzugsweise 40 bis 60 Mol%;
wiederkehrende Struktureinheit der Formel Ib: 15 bis 30 Mol%, vorzugsweise 20 bis 30 Mol%;
wiederkehrende Struktureinheit der Formel Ic: 5 bis 30 Mol%, vorzugsweise 10 bis 20 Mol%; und
wiederkehrende Struktureinheit der Formel Id: 5 bis 30 Mol%, vorzugsweise 10 bis 20 Mol%, mit der Maßgabe, daß $R^2$ nicht für einen Rest der Formel IV und/oder V steht.

Bedeuten irgendwelche Substituenten in den Resten $R^1$, $R^2$ oder $Ar^1$ inerte Reste, so kann es sich dabei um einwertige anorganische Reste, wie Halogen, oder um einwertige, organische Reste, wie Alkyl, Alkoxy, Bis-(N-Alkyl)-amino, Bis-(N-alkyl)-amido oder Nitril handeln. Der Begriff "inerter Rest" bedeutet, daß diese Substituenten unter den Herstellungs- und Verarbeitungsbedingungen der erfindungsgemäßen Copolyamide nicht reagieren.

Bevorzugte inerte Reste sind Chlor oder $C_1$-$C_6$-Alkyl oder $C_1$-$C_6$-Alkoxy.

Besonders bevorzugte inerte Reste sind Chlor, Methoxy oder Methyl.

Bedeuten irgendwelche Reste zweiwertige aromatische Reste, deren Valenzbindungen sich in para- oder in vergleichbarer koaxialer oder paralleler Stellung zueinander befinden, so handelt es sich dabei um ein- oder mehrkernige aromatische Kohlenwasserstoffreste oder um heterocyclisch-aromatische Reste, die ein- oder mehrkernig sein können. Im Falle von heterocyclisch-aromatischen Resten weisen diese insbesondere ein oder zwei Sauerstoff-, Stickstoff- oder Schwefelatome im aromatischen Kern auf.

Mehrkernige aromatische Reste können miteinander kondensiert oder über C-C-Bindungen oder über eine -CO-NH-Gruppe linear miteinander verbunden sein.

Die Valenzbindungen, die in koaxialer oder paralleler zueinander befindlicher Stellung stehen, sind entgegengesetzt gerichtet. Ein Beispiel für koaxiale, entgegengesetzt gerichtete Bindungen sind die Biphenyl-4,4'-en-Bindungen. Ein Beispiel für parallele, entgegengesetzt gerichtete Bindungen sind z.B. die Naphthalin-1,5- oder -2,6-Bindungen, während die Naphthalin-1,8-Bindungen parallel gleichgerichtet sind.

Beispiele für bevorzugte zweiwertige aromatische Reste, deren Valenzbindungen sich in para- oder in vergleichbarer koaxialer oder paralleler Stellung zueinander befinden, sind einkernige aromatische Reste mit zueinander paraständigen freien Valenzen, insbesondere 1,4-Phenylen oder zweikernige kondensierte aromatische Reste mit parallelen, entgegengesetzt gerichteten Bindungen, insbesondere 1,4-, 1,5- und 2,6-Naphthylen, oder zweikernige über eine C-C-Bindung verknüpfte aromatische Reste mit koaxialen, entgegengesetzt gerichteten Bindungen insbesondere 4,4'Biphenylen.

Besonders bevorzugte Reste $R^1$, $R^2$ und $Ar^1$ sind 1,4-Phenylen.

Bedeuten irgendwelche Reste zweiwertige aromatische Reste, deren Valenzbindungen sich in meta- oder in vergleichbarer gewinkelter Position zueinander befinden, so handelt es sich dabei um ein- oder mehrkernige aromatische Kohlenwasserstoffreste oder um heterocyclisch-aromatische Reste, die ein- oder mehrkernig sein können. Im Falle von heterocyclisch-aromatischen Resten weisen diese insbesondere ein oder zwei Sauerstoff-, Stickstoff- oder Schwefelatome im aromatischen Kern auf.

Mehrkernige aromatische Reste können miteinander kondensiert sein oder über C-C-Bindungen oder über Brükkengruppen, wie z.B. -O-, $-CH_2-$, -CO-NH-, -S-, -CO- oder $-SO_2-$ miteinander verknüpft sein.

Beispiele für mehrkernige aromatische Reste, deren Valenzbindungen sich in zur meta-Position vergleichbaren gewinkelten Position befinden, sind 1,6-Naphthylen, 2,7-Naphthylen oder 3,4'-Biphenylen.

Ein bevorzugtes Beispiel für einen einkernigen aromatischen Rest dieses Typs ist 1,3-Phenylen.

Die erfindungsgemäßen Polyamide können unsubstituierte Reste und substituierte Reste nebeneinander in wechselnden Anteilen enthalten.

Dabei kann das Polyamid eine Art oder mehrere Arten substituierter Reste $R^1$, $R^2$, $R^3$, $R^4$ und $R^5$ enthalten; z.B. kann es ausschließlich methylsubstituierte Reste oder es kann Anteile von Resten mit verschiedenen Alkylsubstituenten und/oder mit Halogensubstituenten enthalten.

Die erfindungsgemäßen Polyamide können aber auch ausschließlich unsubstituierte oder substituierte Reste $R^1$, $R^2$, $R^3$, $R^4$ und $R^5$ enthalten. Bevorzugt werden solche erfindungsgemäßen Polyamide, die nur unsubstituierte oder die bis zu ca. 30 Mol-% substituierte Reste, bezogen auf das Polymere, enthalten.

Zur Herstellung der Copolyamide enthaltend die wiederkehrenden Struktureinheiten Ia, Ib, Ic und Id setzt man zweckmäßigerweise ein Dicarbonsäuredichlorid der Formel VIII mit einem Gemisch der Diamine der Formeln IX, X, XI und XII um

$$ClOC-R^1-COCl \quad (VIII),$$

$$H_2N-R^2-NH_2 \quad (IX),$$

$$H_2N-R^3-NH_2 \quad (X),$$

$$H_2N-R^4-NH_2 \quad (XI),$$

$$H_2N-R^5-NH_2 \quad (XII),$$

worin $R^1$ bis $R^5$ die weiter oben definierte Bedeutung besitzen.

Das Dicarbonsäuredichlorid der Formel VIII und die einzelnen Diamintypen können auch in Form von Mischungen eingesetzt werden.

Die Mengenverhältnisse der Diamine IX, X, XI und XII sind dabei jeweils so zu wählen, daß Polyamide mit den oben definierten Mengenanteilen aus Struktureinheiten der Formeln Ia bis Id entstehen.

Es ist für den Fachmann selbstverständlich, daß die Summe aller von aromatischen Säuren abgeleiteten Struktureinheiten und die Summe aller von aromatischen Aminen abgeleiteten Struktureinheiten im wesentlichen gleich sind, d.h., daß sie sich maximal um ca. 1 %, vorzugsweise maximal um 0,2 %, unterscheiden, insbesondere im Rahmen der praktischen Meß- und Dosierungsmöglichkeiten gleich sind.

Das Molekulargewicht der entstehenden Polyamide läßt sich unter anderem über die Auswahl der Mengenverhältnisse von aromatischen Säuren zu aromatischen Aminen steuern. Diese Auswahlkriterien sind dem Fachmann auf dem Gebiet der Polykondensation bekannt.

Beispiele für geeignete aromatische Dicarbonsäuren, von denen sich die Dicarbonsäuredichloride der Formel VIII ableiten, sind Naphthalin-1,4-dicarbonsäure, Naphthalin-1,5-dicarbonsäure, Naphthalin-2,6-dicarbonsäure, Biphenyl-4,4'-dicarbonsäure, 2-Chlorterephthalsäure, 2-Bromterephthalsäure, 2-Methylterephthalsäure und insbesondere Terephthalsäure.

Bis zu 10 Mol-% der Dicarbonsäuredichloride können sich auch von zweiwertigen aromatischen meta-Resten ableiten. Beispiele für Säuren, von denen sich solche Dicarbonsäuredichloride ableiten, sind Naphthalin-1,6-dicarbonsäure, Naphthalin-1,7-dicarbonsäure, Naphthalin-2,7-dicarbonsäure, Biphenyl-3,4'-dicarbonsäure und insbesondere Isophthalsäure.

Als Diamin der Formel IX setzt man vorzugsweise p-Phenylendiamin ein.

Als Diamin der Formel X setzt man vorzugsweise m-Phenylendiamin ein.

Als Diamin der Formel XI setzt man vorzugsweise 1,4-Bis-(4-aminophenoxy)-benzol ein.

Beispiele für besonders geeignete Diamine der Formel XII sind 4,4'-Diaminobenzanilid, 3,4'-Diaminobenzanilid und 2-Chlor-p-phenylendiamin. Besonders bevorzugt ist 2-Chlor-p-phenylendiamin.

Die Copolykondensation der oben beschriebenen monomeren Verbindungen wird im allgemeinen als Lösungspolymerisation ausgeführt.

Dazu werden die miteinander umzusetzenden aromatischen monomeren Verbindungen in der Regel in einem organischen Lösungsmittel gelöst. Das organische Lösungsmittel enthält dabei vorzugsweise zumindest ein Lösungsmittel vom Amidtyp, wie z.B. N-Methyl-2-pyrrolidon, N,N-Dimethylacetamid, Tetramethylharnstoff, N-Methyl-2-piperidon, N,N'-Dimethylethylenharnstoff, N,N,N',N'-Tetramethylmaleinsäureamid, N-Methylcaprolactam, N-Acetylpyrrolidin, N,N-Diethylacetamid, N-Ethyl-2-pyrrolidon, N,N'-Dimethylpropionsäureamid, N,N-Dimethylisobutylamid, N-Methylformamid, N,N'-Dimethylpropylenharnstoff. Für das erfindungsgemäße Verfahren sind die bevorzugten organischen Lösungsmittel N-Methyl-2-pyrrolidon, N,N-Dimethylacetamid und eine Mischung dieser Verbindungen von Bedeutung.

Bei einer bevorzugten Form der Durchführung der Lösungspolymerisation werden die aromatischen monomeren Diamine in einem Amid-Lösungsmittel gelöst. Die so erhaltene Lösung wird dann mit der mindestens einen aromatischen monomeren Verbindung in Form eines aromatischen Dicarbonsäuredihalogenids unter heftigem Umrühren gemischt, um die Copolymerisation einzuleiten.

Dabei wird das Amid-Lösungsmittel nicht nur als Lösungsmittel für die aromatischen monomeren Verbindungen und das daraus erhaltene aromatische Copolyamid sondern auch als Säureakzeptor für ein Wasserstoffhalogenid verwendet, z.B. für Chlorwasserstoff, der als Nebenprodukt der Copolymerisation der aromatischen monomeren Verbindungen entsteht. In einigen Fällen kann es vorteilhaft sein, einen die Löslichkeit fördernden Zusatzstoff zu verwenden, beispielsweise ein Metallhalogenid eines der Metalle der Gruppe I oder II des periodischen Systems, welches der Copolymerisationsmischung vor, während oder nach der Copolymerisation zugesetzt wird. Beispiele für solche Zusatzstoffe sind Alkalimetallhalogenide, wie Lithiumchlorid oder Erdalkalimetallhalogenide, wie Calziumchlorid.

Die Polykondensationstemperaturen liegen bei der Lösungspolymerisation üblicherweise zwischen -20°C und +120°C, bevorzugt zwischen +10°C und +100°C. Besonders gute Ergebnisse werden bei Reaktionstemperaturen zwischen +10°C und +80°C erzielt.

Die Summe der Konzentrationen der aromatischen monomeren Verbindungen in der Polymerisationsgemischlösung kann unter Beachtung des gewünschten Polymerisationsgrades, der gewünschten Viskosität des Polymerisationsgemisches, der Art der verwendeten aromatischen monomeren Verbindungen, der Art des verwendeten Lösungsmittels und der gewünschten Polymerisationstemperatur eingestellt werden. Die günstigste Summe der Konzentrationen kann dabei aufgrund einer Reihe von Vorversuchen für den Ablauf der Polymerisation ermittelt werden.

Polykondensationsreaktionen werden vorzugsweise so ausgeführt, daß nach Abschluß der Reaktion 4 bis 20, vorzugsweise 5 bis 10 Gew.-% an Polykondensat in der Lösung vorliegen. Besonders gute Ergebnisse werden bei Konzentrationen von 5,0 bis 7,5 Gew.-% erzielt.

Im Verlauf der Polykondensation wächst das Molekulargewicht des Polymers und damit auch die Viskosität des Reaktionsansatzes an.

Eine ausreichende Molekül-Kettenlänge ist erreicht, wenn die Viskosität der bei der Polykondensation erhaltenen Polymerlösung einer inhärenten Viskosität des Polymers von ca. 2,5 bis 7,0 dl/g entspricht.

Unter inhärenter Viskosität wird der Ausdruck

$$\eta_{inh} = \frac{\ln \eta_{rel}}{c}$$

verstanden. $\eta_{rel}$ bedeutet dabei die relative Viskosität, c die angewandte Konzentration in g/100 ml.

Sie wird für die Zwecke der vorliegenden Erfindung bestimmt an 0,25 %igen Lösungen von Polymer in N-Methylpyrrolidon bei 25°C.

Das skizzierte, an sich bekannte Verfahren zur Herstellung von aromatischen Polyamiden ist, soweit es zur Herstellung der oben beschriebenen erfindungsgemäßen aromatischen Polyamide dient, ebenfalls Gegenstand der Erfindung.

Wenn die Polymerlösung die zur Weiterverarbeitung erforderliche Viskosität erreicht hat, kann die Polykondensation in üblicher Weise durch Zugabe von monofunktionellen Verbindungen, wie z.B. Acetylchlorid gestoppt werden. Anschließend kann der entstandene und salzartig an das Amidlösungsmittel gebundene Chlorwasserstoff durch Zugabe basischer Substanzen neutralisiert werden.
Geeignet sind dafür beispielsweise Lithiumhydroxyd, Calciumhydroxyd, insbesondere aber Calciumoxid.

Das bei Durchführung des erfindungsgemäßen Verfahrens erhaltene aromatische Copolyamid kann aus dem Copolymerisationsgemisch durch ein Trennverfahren abgeschieden werden, beispielsweise durch Präzipitation. Zur Herstellung einer Lösung für das Ausformen des Copolyamids wird das so gewonnene aromatische Copolyamid dann in einem geeigneten organischen Lösungsmittel gelöst, wobei dieses Verfahren als Auflösungsverfahren zur Herstellung der Ausformlösung bezeichnet wird.

In den Fällen, in denen zur Herstellung des aromatischen Copolyamids gemäß der Erfindung das Verfahren der Lösungspolymerisation angewandt wird, wird das Copolyamid, weil es in dem Lösungsmittel für die Polymerisation hervorragend löslich ist, in diesem jedoch vollständig gelöst. Daher ist es bei industriellem Einsatz des erfindungsgemäßen Verfahrens vorteilhaft, daß bei der Polymerisation erhaltene Gemisch sofort als Ausformlösung für das aromatische Copolyamid zu verwenden.

Das aromatische Copolyamid gemäß der Erfindung ist in einem organischen Lösungsmittel, beispielsweise in organischen Lösungsmitteln vom Amidtyp hervorragend löslich und besitzt eine hervorragende Wärmebeständigkeit und eine überlegene chemische Widerstandsfähigkeit. Das erfindungsgemäße aromatische Copolyamid ist besonders nützlich für die Herstellung von verschiedenen geformten Artikeln, beispielsweise Fasern, Filmen und Beschichtungen, die ebenfalls ein Gegenstand der Erfindung sind.

Der Begriff "Fasern" ist im Rahmen dieser Beschreibung in seiner breitesten Bedeutung zu verstehen; dazu zählen also zum Beispiel Filamente oder Stapelfasern beliebiger Titer.

Der Begriff "Filme" ist im Rahmen dieser Beschreibung ebenfalls in seiner breitesten Bedeutung zu verstehen; dazu zählen also zum Beispiel Ausführungsformen unterschiedlicher Stärke, wie Folien oder Membranen.

Die geformten Gebilde besitzen nicht nur eine hervorragende Wärmebeständigkeit und chemische Beständigkeit, sondern weisen auch überlegene mechanische Eigenschaften auf, beispielsweise hinsichtlich der Zugfestigkeit, der Abriebfestigkeit und des Elastizitätsmoduls. Die Lösung des aromatischen Copolyamids kann ebenfalls auf unterschiedliche Weise verwendet werden, beispielsweise zur Produktion von Fasern, Folien, blattförmigen Elementen, Faserstoffen und anderen geformten Artikeln.

Bei dem Verfahren zum Herstellen der Ausformlösung des aromatischen Copolyamids wird als Lösungsmittel vorzugsweise ein Lösungsmittel vom Amidtyp verwendet, insbesondere die weiter obengenannten Lösungsmittel vom Amidtyp, bzw. eine Mischung von zwei oder mehr der genannten Verbindungen.

Für die Herstellung der Ausformlösung ist es vorteilhaft, wenn die Konzentration des aromatischen Copolyamids in einem Bereich zwischen 4 und 15 Gew.-%, insbesondere zwischen 5 und 10 Gew.-% gehalten wird. Wenn es erforderlich ist, kann die Ausformlösung einen Zusatzstoff zur Förderung der Löslichkeit enthalten, wobei mindestens ein Metallhalogenid eines Metalls der Gruppen I und II des Periodensystems verwendet werden kann, beispielsweise Lithiumchlorid, Kalziumchlorid oder Magnesiumbromid, und zwar in einer Konzentration zwischen 0,2 und 10 %, vorzugsweise zwischen 0,5 und 5 %, bezogen auf das Gesamtgewicht der Ausformlösung. Der Zusatzstoff zur Förderung der Löslichkeit fördert dabei auch die Stabilität der Ausformlösung bei erhöhter Temperatur.

Das Ausformen der Ausformlösung zu einem geformten Artikel kann nach jedem geeigneten Trockenverfahren, Naßverfahren oder Trocken-Naßverfahren erfolgen. In den Fällen, in denen ein Naßverfahren angewandt wird, um die Ausformlösung beispielsweise zu Filamenten auszuformen, wird die Ausformlösung oder - in diesem Fall - die Spinnlösung durch eine Düse, beispielsweise eine Spinndüse, in eine koagulierende Flüssigkeit extrudiert. Dabei ist es gewöhnlich vorteilhaft, wenn die Koagulationsflüssigkeit aus Wasser oder aus einer wäßrigen, ein polares organisches

Lösungsmittel enthaltenden Lösung besteht. Dabei kann das polare organische Lösungsmittel unter denselben Amid-Lösungsmitteln ausgewählt werden, die gewöhnlich für das Lösen des aromatischen Copolyamids verwendet werden.

Als polares organisches Lösungsmittel wird in der Koagulationsflüssigkeit vorzugsweise dasselbe Lösungsmittel verwendet, welches in der Ausformlösung enthalten ist. Die Koagulationsflüssigkeit wird vorzugsweise bei einer Temperatur zwischen 0°C und der Siedetemperatur der Koagulationsflüssigkeit bei Atmosphärendruck eingesetzt.

Das polare organische Lösungsmittel liegt in der Koagulationsflüssigkeit vorzugsweise in einer Konzentration von weniger als 70 Gew.-%, insbesondere weniger als 50 Gew.-% vor.

Das vorstehend erläuterte Ausformverfahren ist besonders für die Herstellung von Filmen oder Fasern aus einer Ausformlösung geeignet.

Bei der Herstellung von Fasern aus dem aromatischen Copolyamid wird die Ausform- bzw. Spinnlösung durch einen Spinnkopf mit mehreren Spinnöffnungen extrudiert, wobei die filamentförmigen Ströme der Spinnlösung in einer der oben angegebenen Koagulationsflüssigkeiten verfestigt werden (Naßverfahren) oder in einer die Verdampfung fördernden Atmosphäre (Trockenverfahren). Eine ebenfalls geeignete Variante ist das sogenannte "Trockendüsen-Naßspinnverfahren", wie es z. B. in der US-A-34 14 645 beschrieben ist. Für das Spinnen kann eine übliche Horizontal- oder Vertikal-Naßspinnmaschine, eine Trockendüsen-Naßspinnmaschine, oder eine Spinnmaschine verwendet werden, in der der Materialfluß unter Spannung nach unten erfolgt.

Beim Naßspinnen eines aromatischen Copolyamids gemäß der Erfindung erfolgt die Koagulation vorzugsweise unter Verwendung einer Koagulationsflüssigkeit mit Zusatzstoff zur Koagulationsförderung, wobei sich an diese Koagulation ein weiterer Koagulationsschritt anschließt, in dessen Verlauf die koagulierenden Filamente des aromatischen Copolyamids in ein Wasserbad eingeleitet werden, welches auf einer Temperatur zwischen 0 und 100°C gehalten wird.

Der zusätzliche Koagulationsschritt dient dabei zur Vervollständigung der Koagulation durch Entfernen des Lösungsmittels. Außerdem werden Zusatzstoffe zur Koagulationsförderung, falls solche Stoffe verwendet werden, aus den koagulierten Filamenten ausgewaschen.

Aus der vorstehenden Beschreibung wird deutlich, daß das erfindungsgemäße aromatische Copolyamid unter Verwendung üblicher Spinnverfahren und -vorrichtungen ohne weiteres zu Filamenten verarbeitet werden kann, ohne daß ein gefährliches oder schädliches Lösungsmittel, wie z.B. konzentrierte Schwefelsäure, verwendet werden müßte.

Hierdurch werden die Gefahren für das Bedienungspersonal verringert. Außerdem haben die aus dem erfindungsgemäßen Copolyamid hergestellten Filamente eine dichte interne Struktur.

Die Ausformlösung kann auch unter Verwendung üblicher Auffächerungs- oder Extrudierverfahren zu einem Film bzw. einer Folie verarbeitet werden.

Fasern oder Filme, die nach den vorstehend angegebenen Ausformverfahren hergestellt werden, werden gewöhnlich einem Streckvorgang unterworfen, durch den nicht nur die mechanischen Eigenschaften, wie z.B. die Zugfestigkeit und der Elastizitätsmodul, gefördert werden sondern auch die thermischen Eigenschaften, wie z.B. die thermische Stabilität der so hergestellten Filamente oder Folien.

Filamente aus den erfindungsgemäßen aromatischen Copolyamiden werden in der Regel verstreckt, um eine hohe mechanische Festigkeit und einen hohen Elastizitätsmodul zu erzielen. Das Verstreckungsverhältnis beträgt dabei üblicherweise etwa 1:4 bis 1:20. Die Verstrecktemperatur liegt dabei in der Regel zwischen 250 und 500°C, vorzugsweise zwischen 300 und 450°C.

Das Strecken kann in einem einzigen Schritt, in zwei Schritten oder in mehreren Schritten ausgeführt werden, wobei zum Aufheizen eine Heizplatte oder eine zylindrische Heizvorrichtung verwendet werden kann. Außerdem können die gestreckten Filamente oder Folien einer weiteren Wärmebehandlung bei gleicher oder höherer Temperatur unterworfen werden, um ihre kristalline Struktur zu fördern. In diesem Zusammenhang sei darauf hingewiesen, daß das aromatische Copolyamid gemäß der Erfindung nicht nur hinsichtlich seiner Lösbarkeit in üblichen organischen Lösungsmitteln überraschend vorteilhaft ist, sondern nach der Herstellung der Fasern oder Filme ohne weiteres unter "milden" Arbeitsbedingungen verstreckt werden kann.

Die Fasern aus einem aromatischen Copolyamid gemäß der Erfindung, welche hervorragende mechanische und thermische Eigenschaften besitzen und sich durch eine hohe Verstreckbarkeit auszeichnen, können auf die verschiedenste Weise industriell eingesetzt werden, beispielsweise zur Verstärkung von Kunststoffen, insbesondere als Verstärkungsmaterialien für die Gewebeeinlagen von Autoreifen und anderen Gummiartikeln, als wärmebeständige Isolationsmaterialien, zur Herstellung von Filtergeweben und als leichte Dämmstoffe. Filme aus einem aromatischen Copolyamid gemäß der Erfindung können als wärmebeständige elektrische Isolationsmaterialien oder zur Herstellung von Membranen eingesetzt werden.

Weitere Eigenschaften und Vorteile der Erfindung werden nachstehend anhand von Beispielen noch näher erläutert.

Dabei versteht es sich jedoch, daß die Erfindung nicht auf die Ausführungsbeispiele beschränkt ist. Vielmehr stehen dem Fachmann, ausgehend von den Ausführungsbeispielen, zahlreiche Möglichkeiten für Änderungen und/oder Ergänzungen zu Gebote, ohne daß er dabei den Grundgedanken der Erfindung verlassen müßte.

Beispiel 1

Aromatisches Copolyamid aus 100 Mol-% Terephthalsäuredichlorid, 50 Mol-% p-Phenylendiamin, 20 Mol-% m-Phenylendiamin, 20 Mol-% 1,4-Bis-(4-aminophenoxy)-benzol und 10 Mol-% 2-Chlor-p-phenylendiamin

51,37 g (0,475 Mol) p-Phenylendiamin, 20,55 g (0,19 Mol) m-Phenylendiamin, 55,53 g (0,19 Mol) 1,4-bis-(4-aminohenoxy)-benzol und 13,55 g (0,095 Mol) 2-Chlor-p-phenylendiamin werden unter Stickstoff in 4036 g N-Methylpyrrolidon (NMP) gelöst und bei 14°C mit 192,87 g (0,95 Mol) Terephthalsäuredichlorid versetzt. Bei Erreichen der gewünschten Viskosität wird die Kondensation durch Zusatz von 1,54 g Acetylchlorid abgestoppt und anschließend mit 107,6 g einer 59 %igen Calziumoxid-Suspension in NMP neutralisiert. Die Lösung wird filtriert, entgast und naß versponnen. Dazu wird sie aus einer Düse mit 100 Öffnungen von jeweils 0,1 mm Durchmesser in ein Koagulationsbad, bestehend aus einer 80°C warmen Lösung von 35 % N-Methylpyrrolidon in Wasser mit einer Geschwindigkeit von 14 m/min ausgesponnen. Die erhaltenen Fäden werden durch zwei Wasserbäder, eine Waschmaschine, über eine Trokkengalette und schließlich über ein Bügeleisen der Temperatur von 420°C auf das 10fache verstreckt.

Der Einzelfilamenttiter beträgt 1,47 dtex bei einer feinheitsbezogenen Festigkeit von 148 cN/tex, eine Dehnung von 5 % und einem Anfangsmodul von 32 N/tex, bezogen auf 100 % Dehnung.

Beispiele 2 bis 6

Nach der in Beispiel 1 beschriebenen Arbeitsweise werden weitere aromatische Copolyamide hergestellt, versponnen und geprüft. In der folgenden Tabelle I werden die verwendeten Diamine, deren Mengenverhältnisse, die Lösungsviskositäten der erhaltenen Polymeren, die Verspinnbedingungen und Eigenschaften der erhaltenen Fasern aufgeführt. In der Tabelle I werden für die Diamine folgende Abkürzungen verwendet:

TPC = Terephthalsäuredichlorid
PPD = p-Phenylendiamin
MPD = m-Phenylendiamin
BAPOB = 1,4-Bis-(4'-aminophenoxy)-benzol
Cl-PPD= 2-Chlor-p-phenylendiamin
DABA = 4,4'-Diaminobenzanilid

| Beispiel Nr. | 2 | 3 | 4 | 5 | 6 |
|---|---|---|---|---|---|
| TPC (mol%) | 100 | 100 | 100 | 100 | 100 |
| PPD (mol%) | 55 | 50 | 50 | 50 | 50 |
| BAPOB (mol%) | 10 | 20 | 15 | 20 | 20 |
| MPD (mol%) | 30 | 20 | 20 | 20 | 25 |
| Cl-PPD (mol%) | | | | 10 | 5 |
| DABA (mol%) | 5 | 10 | 15 | | |
| Einzelfilamenttiter (dtex) | 2,99 | 1,76 | 1,74 | 1,56 | 1,36 |
| Reißfestigkeit (cN/tex) | 86 | 122 | 130 | 149 | 95 |
| Reißdehnung (%) | 4 | 4,9 | 3,9 | 5 | 4,7 24 |
| E-Modul (N/tex) | 27 | 31 | 40 | 34 | |
| Verstreckverhältnis 1: | 4 | 6 | 5,6 | 10 | 7,5 |
| Inhärente Viskosität (dl/g)* | 5,64 | 6,10 | 5,09 | 5,92 | 6,10 |

*) bei 25°C in NMP

**Patentansprüche**

1. In organischen Polyamid-Lösungsmitteln lösliches aromatisches Copolyamid enthaltend die wiederkehrenden Struktureinheiten der Formeln Ia, Ib, Ic und Id

$$[\text{-OC-R}^1\text{-CO-NH-R}^2\text{-NH-}] \qquad \text{(Ia),}$$

$$[\text{-OC-R}^1\text{-CO-NH-R}^3\text{-NH-}] \qquad \text{(Ib),}$$

$$[\text{-OC-R}^1\text{-CO-NH-R}^4\text{-NH-}] \qquad \text{(Ic),}$$

$$[\text{-OC-R}^1\text{-CO-NH-R}^5\text{-NH-}] \qquad \text{(Id),}$$

worin mindestens 90 Mol% aller Reste $R^1$, bezogen auf die Menge dieser Reste im Copolymer, einen zweiwertigen aromatischen Rest bedeuten, dessen Valenzbindungen sich in para- oder in vergleichbarer koaxialer oder paralleler Stellung zueinander befinden, der gegebenenfalls mit ein oder zwei inerten Resten substituiert ist, und bis zu 10 Mol% aller Reste $R^1$, bezogen auf die Menge dieser Reste im Copolymer, einen zweiwertigen aromatischen Rest bedeuten, dessen Valenzbindungen sich in meta- oder in vergleichbarer gewinkelter Stellung zueinander befinden, der gegebenenfalls mit ein oder zwei inerten Resten substituiert ist,

$R^2$ ein zweiwertiger aromatischer Rest ist, dessen Valenzbindungen sich in para- oder in vergleichbarer koaxialer oder paralleler Stellung zueinander befinden, der gegebenenfalls mit ein oder zwei inerten Resten substituiert ist,

$R^3$ einen Rest der Formel II bedeutet,

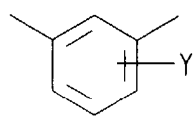

(II),

$R^4$ einen Rest der Formel III bedeutet,

$$\text{-Ar}^1\text{-O-Ar}^1\text{-O-Ar}^1\text{-} \qquad \text{(III),}$$

und

$R^5$ einen Rest der Formel IV und/oder V bedeutet,

2. Aromatische Copolyamide gemäß Anspruch 1, dadurch gekennzeichnet, daß mindestens 90 Mol% aller Reste $R^1$, vorzugsweise 100 Mol% der Reste $R^1$, bezogen auf die Menge dieser Reste, 1,4-Phenylen sind, und bis zu 10 Mol% aller Reste $R^1$, bezogen auf die Menge dieser Reste, 1,3-Phenylen darstellen.

3. Aromatische Copolyamide gemäß Anspruch 1, dadurch gekennzeichnet, daß $R^2$ 1,4-Phenylen bedeutet.

4. Aromatische Copolyamide gemäß Anspruch 1, dadurch gekennzeichnet, daß $Ar^1$ 1,4-Phenylen bedeutet.

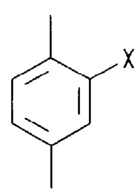

(IV),

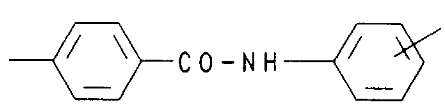

(V),

worin $Ar^1$ eine der für $R^2$ definierten Bedeutungen aufweist, Y Wasserstoff, ein Halogenatom, Methyl oder Methoxy ist, X ein Halogenatom, Methyl oder Methoxy bedeutet, und wobei der Anteil der wiederkehrenden Struktureinheiten Ia, Ib, Ic und Id, bezogen auf die Summe dieser Struktureinheiten im Copolymer, innerhalb folgender Grenzen liegt:

wiederkehrende Struktureinheit der Formel Ia: 30 bis 70 Mol%;
wiederkehrende Struktureinheit der Formel Ib: 15 bis 30 Mol%;
wiederkehrende Struktureinheit der Formel Ic: 5 bis 30 Mol%; und
wiederkehrende Struktureinheit der Formel Id: 5 bis 30 Mol%,

mit der Maßgabe, daß $R^2$ nicht für einen Rest der Formel IV und/oder V steht.

**5.** Aromatische Copolyamide gemäß Anspruch 1, dadurch gekennzeichnet, daß Y und X Chlor oder Brom bedeuten.

**6.** Aromatische Copolyamide gemäß Anspruch 1, dadurch gekennzeichnet, daß $R^5$ ein Rest der Formel IV ist.

**7.** Aromatische Copolyamide gemäß Anspruch 1, dadurch gekennzeichnet, daß der Anteil der wiederkehrenden Struktureinheiten Ia, Ib, Ic und Id, bezogen auf die Summe dieser Struktureinheiten im Copolymer, innerhalb folgender Grenzen liegt:

wiederkehrende Struktureinheit der Formel Ia: 40 bis 60 Mol%;
wiederkehrende Struktureinheit der Formel Ib: 20 bis 30 Mol%;
wiederkehrende Struktureinheit der Formel Ic: 10 bis 20 Mol%; und
wiederkehrende Struktureinheit der Formel Id: 10 bis 20 Mol%.

**8.** Verfahren zur Herstellung von Copolyamiden gemäß Anspruch 1, dadurch gekennzeichnet, daß man ein Dicarbonsäuredichlorid der Formel VIII mit einem Gemisch der Diamine der Formeln IX, X, XI und XII umsetzt

$$ClOC\text{-}R^1\text{-}COCl \qquad (VIII),$$

$$H_2N\text{-}R^2\text{-}NH_2 \qquad (IX),$$

$$H_2N\text{-}R^3\text{-}NH_2 \qquad (X),$$

$$H_2N\text{-}R^4\text{-}NH_2 \qquad (XI),$$

$$H_2N\text{-}R^5\text{-}NH_2 \qquad (XII),$$

worin die Reste $R^1$ bis $R^5$ die in Anspruch 1 definierte Bedeutung aufweisen und worin die Molanteile der Diamine der Formeln IX bis XII, bezogen auf die Summe der Anteile dieser Diamine, innerhalb solcher Grenzen gewählt werden, daß ein Copolyamid mit den in Anspruch 1 definierten Mengenanteilen der wiederkehrenden Struktureinheiten der Formeln Ia, Ib, Ic und Id entsteht.

**9.** Geformte Gebilde aus aromatischen Copolyamiden gemäß Anspruch 1.

**10.** Geformte Gebilde gemäß Anspruch 9, dadurch gekennzeichnet, daß es sich um Fasern, Filme oder Beschichtungen handelt.

**11.** Verwendung von Fasern aus aromatischen Copolyamiden gemäß Anspruch 1 zur Verstärkung von Kunststoffen, insbesondere zur Verstärkung von Elastomeren.

## Claims

1. An aromatic copolyamide which is soluble in organic polyamide solvents and contains the recurring structural units of the formulae Ia, Ib, Ic and Id

$$[\text{-OC-R}^1\text{-CO-NH-R}^2\text{-NH-}] \quad \text{(Ia)},$$

$$[\text{-OC-R}^1\text{-CO-NH-R}^3\text{-NH-}] \quad \text{(Ib)},$$

$$[\text{-OC-R}^1\text{-CO-NH-R}^4\text{-NH-}] \quad \text{(Ic)},$$

$$[\text{-OC-R}^1\text{-CO-NH-R}^5\text{-NH-}] \quad \text{(Id)},$$

in which at least 90 mol % of all radicals $R^1$, with respect to the amount of these radicals in the copolymer, are a divalent aromatic radical, the valency bonds of which are in the para-position or in a comparable coaxial or parallel position with respect to one another, and which is optionally substituted by one or two inert radicals, and up to 10 mol % of all radicals $R^1$, with respect to the amount of these radicals in the copolymer, are a divalent aromatic radical, the valency bonds of which are in the meta-position or in a comparable angled position with respect to one another, and which is optionally substituted by one or two inert radicals,

$R^2$ is a divalent aromatic radical, the valency bonds of which are in the para-position or in a comparable coaxial or parallel position with respect to one another, and which is optionally substituted by one or two inert radicals, and

$R^3$ is a radical of the formula II

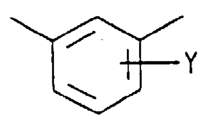

(II),

$R^4$ is a radical of the formula III

$$\text{-Ar}^1\text{-O-Ar}^1\text{-O-Ar}^1\text{-} \quad \text{(III)},$$

and

$R^5$ is a radical of the formula IV and/or V

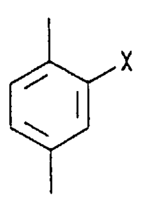

(IV),

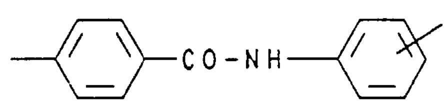

(V),

in which $Ar^1$ has one of the meanings defined for $R^2$, Y is hydrogen, a halogen atom, methyl or methoxy, X is a halogen atom, methyl or methoxy, and the proportion of recurring structural units Ia, Ib, Ic and Id, with respect to the sum of these structural units in the copolymer, being within the following limits:

recurring structural unit of the formula Ia: 30 to 70 mol %;
recurring structural unit of the formula Ib: 15 to 30 mol %;
recurring structural unit of the formula Ic: 5 to 30 mol %; and
recurring structural unit of the formula Id: 5 to 30 mol %,

with the proviso that $R^2$ is not a radical of the formula IV and/or V.

**2.** The aromatic copolyamide as claimed in claim 1, wherein at least 90 mol % of all radicals $R^1$, preferably 100 mol % of the radicals $R^1$, with respect to the amount of these radicals, are 1,4-phenylene, and up to 10 mol % of all radicals $R^1$, with respect to the amount of these radicals, are 1,3-phenylene.

**3.** The aromatic copolyamide as claimed in claim 1, wherein $R^2$ is 1,4-phenylene.

**4.** The aromatic copolyamide as claimed in claim 1, wherein $Ar^1$ is 1,4-phenylene.

**5.** The aromatic copolyamide as claimed in claim 1, wherein Y and X are chlorine or bromine.

**6.** The aromatic copolyamide as claimed in claim 1, wherein $R^5$ is a radical of the formula IV.

**7.** The aromatic copolyamide as claimed in claim 1, wherein the proportion of recurring structural units Ia, Ib, Ic and Id, with respect to the sum of these structural units in the copolymer, is within the following limits:

recurring structural unit of the formula Ia: 40 to 60 mol %;
recurring structural unit of the formula Ib: 20 to 30 mol %;
recurring structural unit of the formula Ic: 10 to 20 mol %; and
recurring structural unit of the formula Id: 10 to 20 mol %.

**8.** A process for the preparation of the copolyamide as claimed in claim 1, wherein a dicarboxylic acid dichloride of the formula VIII is reacted with a mixture of the diamines of the formulae IX, X, XI and XII

$$ClOC\text{-}R^1\text{-}COCl \quad (VIII),$$

$$H_2N\text{-}R^2\text{-}NH_2 \quad (IX),$$

$$H_2N\text{-}R^3\text{-}NH_2 \quad (X),$$

$$H_2N\text{-}R^4\text{-}NH_2 \quad (XI),$$

$$H_2N\text{-}R^5\text{-}NH_2 \quad (XII),$$

in which the radicals $R^1$ to $R^5$ have the meaning defined in claim 1 and in which the molar proportions of the diamines of the formulae IX to XII, with respect to the sum of the proportions of these diamines, are selected within limits such that a copolyamide having the proportions of recurring structural units of the formulae Ia, Ib, Ic and Id defined in claim 1 is formed.

**9.** A shaped structure composed of an aromatic copolyamide as claimed in claim 1.

**10.** The shaped structure as claimed in claim 9, which is a fiber, film or coating.

**11.** The use of fibers composed of an aromatic copolyamide as claimed in claim 1 to reinforce plastics, in particular to reinforce elastomers.

**Revendications**

1. Copolyamide aromatique soluble dans les solvants organiques pour polyamide, contenant les motifs structuraux répétitifs de formules Ia, Ib, Ic et Id

$$[-OC-R^1-CO-NH-R^2-NH-] \quad (Ia)$$

$$[-OC-R^1-CO-NH-R^3-NH-] \quad (Ib)$$

$$[-OC-R^1-CO-NH-R^4-NH-] \quad (Ic)$$

$$[-OC-R^1-CO-NH-R^5-NH-] \quad (Id)$$

dans lesquelles au moins 90% en moles de tous les restes $R^1$ par rapport à la quantité de ces restes dans le copolymère, représentent un reste aromatique divalent, dont les liaisons de valence se trouvent en position para ou en des positions comparables coaxiales ou parallèles les unes par rapport aux autres, qui éventuellement est substitué par un ou deux restes inertes, et jusqu'à 10% en moles de tous les restes $R^1$, par rapport à la quantité de ces restes dans le copolymère, représentent un reste aromatique divalent, dont les liaisons de valence sont en position méta ou en des positions comparables angulaires les unes par rapport aux autres, qui est éventuellement substitué par un ou deux restes inertes,

$R^2$ est un reste aromatique divalent, dont les liaisons de valence se trouvent en position para ou en des positions comparables coaxiales ou parallèles les unes par rapport aux autres, qui éventuellement est substitué par un ou deux restes inertes,
$R^3$ représente un reste de formule II

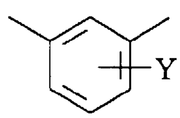 (II)

$R^4$ représente un reste de formule III

$$-Ar^1-O-Ar^1-O-Ar^1- \quad (III)$$

et
$R^5$ représente un reste de formule IV et/ou V,

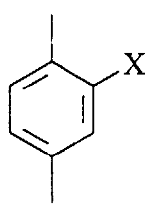 (IV), 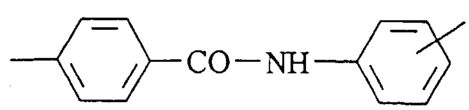 (V),

dans lesquelles $Ar^1$ possède une des significations définies pour $R^2$, Y est hydrogène, un atome d'halogène, un groupe méthyle ou méthoxy, X est un atome d'halogène, un groupe méthyle ou méthoxy, et dans lesquelles la proportion des motifs structuraux répétitifs Ia, Ib, Ic et Id, par rapport à la somme de ces motifs structuraux

dans le copolymère, se situe à l'intérieur des limites suivantes :

motifs structuraux répétitifs de formule Ia : 30 à 70% en moles;
motifs structuraux répétitifs de formule Ib : 15 à 30% en moles;
motifs structuraux répétitifs de formule Ic : 5 à 30% en moles; et
motifs structuraux répétitifs de formule Id : 5 à 30% en moles,

à la condition que $R^2$ ne soit pas un reste de formule IV et/ou V.

2. Copolyamide aromatique selon la revendication 1, caractérisé en ce qu'au moins 90% en mole de tous les restes $R^1$, de préférence 100% en mole des restes $R^1$, par rapport à la quantité de ces restes, sont des restes 1,4-phénylène et que jusqu'à 10% en mole de tous les restes $R^1$, par rapport à la quantité de ces restes, sont des restes 1,3-phénylène.

3. Copolyamide aromatique selon la revendication 1, caractérisé en ce que $R^2$ représente un reste 1,4-phénylène.

4. Copolyamide aromatique selon la revendication 1, caractérisé en ce que $Ar^1$ représente un reste 1,4-phénylène.

5. Copolyamide aromatique selon la revendication 1, caractérisé en ce que Y et X représentent le chlore ou le brome.

6. Copolyamide aromatique selon la revendication 1, caractérisé en ce que $R^5$ représente un reste de formule IV.

7. Copolyamide aromatique selon la revendication 1, caractérisé en ce que la proportion de motifs structuraux répétitifs Ia, Ib, Ic et Id, par rapport à la somme des motifs structuraux dans le copolymère, se situe à l'intérieur des limites suivantes :

motifs structuraux répétitifs de formule Ia : 40 à 60% en moles;
motifs structuraux répétitifs de formule Ib : 20 à 30% en moles;
motifs structuraux répétitifs de formule Ic : 10 à 20% en moles; et
motifs structuraux répétitifs de formule Id : 10 à 20% en moles.

8. Procédé pour la préparation de copolyamides selon la revendication 1, caractérisé en ce qu'on fait réagir un dichlorure d'acide dicarboxylique de formule VIII avec un mélange de diamines de formules IX, X, XI et XII

$$ClOC\text{-}R^1\text{-}COCl \qquad (VIII),$$

$$H_2N\text{-}R^2\text{-}NH_2 \qquad (IX),$$

$$H_2N\text{-}R^3\text{-}NH_2 \qquad (X),$$

$$H_2N\text{-}R^4\text{-}NH_2 \qquad (XI),$$

$$H_2N\text{-}R^5\text{-}NH_2 \qquad (XII),$$

dans lesquelles les restes $R^1$ à $R^5$ possèdent les significations données dans la revendication 1 et dans lesquelles la proportion molaire des diamines de formules IX à XII, par rapport à la somme des proportions de ces diamines, se situe à l'intérieur de limites telles qu'il se forme un copolyamide avec les proportions définies dans la revendication 1, pour les motifs structuraux répétitifs de formules Ia, Ib, Ic et Id.

9. Articies moulés en copolyamides aromatiques selon la revendication 1.

10. Articles moulés selon la revendication 9, caractérisés en ce qu'il s'agit de fibres, de films ou de revêtements.

**11.** Utilisation des fibres en copolyamides aromatiques selon la revendication 1 pour le renforcement de matières plastiques, en particulier pour le renforcement des élastomères.